# EUROPÄISCHE PATENTSCHRIFT

(11) **EP 2 930 058 B1**
(45) Veröffentlichungstag und Bekanntmachung des Hinweises auf die Patenterteilung: **01.04.2020**
(21) Anmeldenummer: 15000680.7
(22) Anmeldetag: 09.03.2015
(51) Int. Cl.: B60P 1/02, B60P 3/00

(54) **INNENLADER MIT V-FÖRMIGER HUBSCHWINGE**
INLOADER WITH A V-SHAPED LIFTING PINION
CHARGEUR D'INTÉRIEUR DOTÉ DE BRAS DE LEVÉE EN V

(30) Priorität: 26.03.2014 DE 202014101419 U
(43) Veröffentlichungstag der Anmeldung: 14.10.2015
(73) Patentinhaber: Langendorf GmbH, 45731 Waltrop (DE)
(72) Erfinder: Strautmann, Klaus-Peter, Dr., 48291 Telgte (DE); Tebrügge, Johannes, 45731 Waltrop (DE)
(74) Vertreter: Dr. Träger & Strautmann PAe PartG mbB

(56) Entgegenhaltungen:
- DE-A1- 2 307 430
- DE-A1- 3 507 587
- US-A- 2 905 481
- US-A- 3 271 042
- US-A- 3 861 716

## Beschreibung

Die Erfindung betrifft einen Innenlader, umfassend:
- ein Chassis mit zwei parallel zueinander angeordneten Fahrzeuglängsträgern, an denen Achshalteböcke mit gefederten Einzelradschwingen zur Aufnahme von Fahrzeugrädern befestigt sind,
- und eine über Bolzenaufnahmen an den Fahrzeuglängsträgern gelagerte, hydraulisch oder pneumatisch angetriebene Hubschwinge zur Aufnahme einer Sattelplatte, die einen Zapfen zum Anschließen an eine Sattelzugmaschine trägt,
- wobei die Hubschwinge aus zwei zueinander spitzwinklig in Richtung Sattelplatte zulaufenden Hubschweingenarmen gebildet ist.

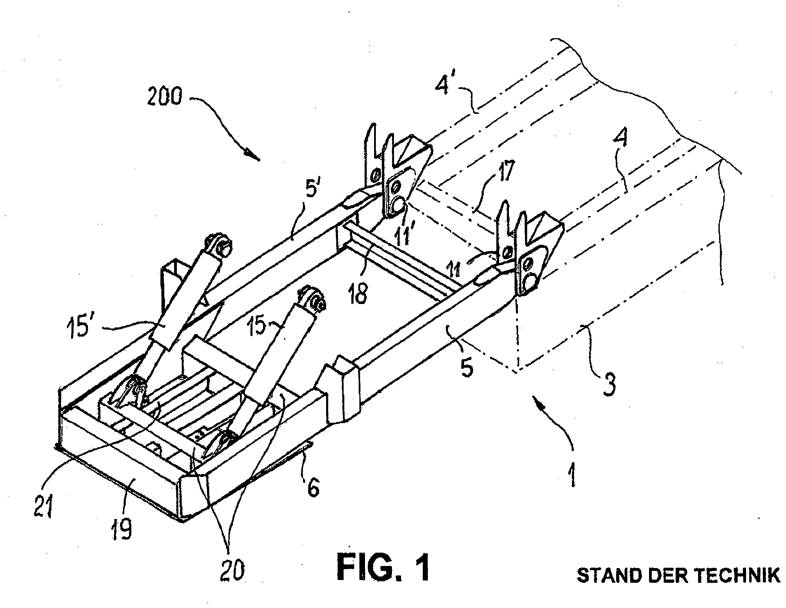

In Fig. 1 ist ein Innenlader 200 der eingangs genannten Art schematisch, ohne die dazu üblicherweise gehörenden Teile, wie Achshalteböcke, Einzelradaufhängung, Fahrzeugräder und Transportgestell zu zeigen, dargestellt. Der insbesondere für den Transport von großformatigen Glasscheiben bestimmte Innenlader 200 umfasst ein Chassis 3 mit zwei zueinander parallel verlaufenden Längsträgern 4, 4' und wenigstens einem diese verbindenden - eine rechteckige Rahmenkonstruktion bildend - Querträger 17, sowie eine über Bolzenaufnahmen 11, 11' an den Längsträgern 4, 4' schwenkbar gelagerte Hubschwinge 1, welche ebenso zwei zueinander parallel angeordnete Hubschwingenarme 5, 5' und diese verbindende Querträger 18, 19 aufweist. Die Hubschwinge 1 trägt eine mit mehreren Quer- und Längsbalken 20; 21 verstärkte Sattelplatte 6 mit daran gelagerten Hydraulikzylindern 15, 15'. Die Hubschwinge 1 zeichnet sich durch eine insgesamt schwere Bauweise aus.

Der gattungsgemäße Innenlader ist insbesondere für den Transport großflächiger oder großvolumiger Transportgüter, insbesondere von Flachglas oder Betonfertigteilen, aber auch Paletten und anderer sperrigen Transportgüter bestimmt. Der Innenlader wird über eine Zapfenverbindung mit einer Sattelzugmaschine verbunden und über auf die Achsschwingen der Hinterräder und auf die Sattelzugmaschine einwirkende Luftfederbälge oder Hydraulikzylinder aus der niedrigen Ladestellung in die höhere Transportstellung und umgekehrt anhebend bzw. absenkend gebracht. Die Hinterräder mit den Achsschwingen verfügen über einen in einen Achsbock integrierten Achsbolzen mit einer einen bestimmten Radsturz und Radvorsprung vorgebenden Schwingenlagerung.

Die Innenlader dienen vor allem zum Transport großer Flachglasscheiben, die besonders gesichert und angeordnet werden müssen, um Transportschäden zu vermeiden. Das Flachglas wird in A- oder L-förmigen Transportgestellen bereitgestellt. Das Transportgestell, und umgekehrt auch das Fahrgestell des Innenladers, weisen zueinander korrespondierende Längsträger auf, so dass beim Anheben des Fahrgestells des Innenladers das Transportgestell automatisch mit angehoben und anschließend verfahren wird. Zum Anheben werden die dem Fahrgestell zugeordneten Luftfederbälge, oder Hydraulikzylinder, die vorher entlastet worden waren, wieder mit Druckluft beaufschlagt, so dass sich das Fahrgestell, das mit den Hinterrädern über Achsschwingen verbunden ist, entsprechend anhebt und das Transportgestell mit hochhebt.

Aus US 3 271 042 A1 ist ein anhebbarer und absenkbarer Anhänger bekannt, der über eine Zugdeichsel mit einer Anhängerkupplung des Zugfahrzeuges verbunden werden kann. Zwar weist dieser Anhänger spitzwinklig zu einer "apertured extension 100" zusammenlaufende Arme auf, jedoch nicht im Zusammenhang mit einer an einer Hubschwinge angebrachten Sattelplatte.

Aus DE 23 07 460 A1 ist ein Sattelanhänger für Sattelzüge mit üblichen Zugmaschinen bekannt, der eine übliche und bereits als Stand der Technik in der vorliegenden Anmeldung beschriebene Hubschwinge aufweist. Die Hubschwinge ist an ihrem auf der Zugmaschine liegenden Sattelteil mit einer Liftvorrichtung gegenüber dem Auflager an der Zugmaschine ausgestattet. Zueinander spitzwinklig in Richtung Sattelplatte zulaufende Hubschwingenarme sind in DE 23 07 460 A1 nicht offenbart.

Aus US 3 861 716 A ist ein anhebbarer und absenkbarer Anhänger bekannt. Zur Anhängung an eine Zugmaschine weist der Anhänger eine Deichsel mit spitzwinklig zueinander angeordneten Armen auf an deren Ende ein Kupplungsauge (eyelet 189, Fig. 19).

US 2 905 481 A offenbart unterschiedliche Deichselausführungen, jedoch nicht im Zusammenhang mit einer an der Deichsel angebrachten Sattelplatte.

US 2 038 975 A offenbart eine Hubschwinge mit einer an der Hubschwinge angebrachten Sattelplatte zur lösbaren Montage am Chassis eines Innenladers mit zwei zueinander spitzwinklig in Richtung Sattelplatte zulaufenden Hubschwingenarmen.

Derartige Innenlader sind auch in DE 35 07 587 A1 beschrieben. Bei derartigen Innenladern werden die Hinterräder über die Achsschwingen gehalten, die ihrerseits über ein Schwenklager am Fahrgestell gelagert sind. Dieses Schwenklager oder Schwingenlager ist im Endbereich über eine Gegenplatte gehalten, die mit Schrauben verschraubt ist. Die nähere Ausgestaltung ergibt sich außerdem aus DE 196 05 710 A1.

Um das gesamte Chassis anheben bzw. absenken zu können, ist die Sattelplatte, die den Zapfen zum Anschließen an einer Zugmaschine trägt, an einer hydraulischen oder pneumatischen Hubschwinge angebracht, die gemeinsam mit oder unabhängig von den Luftfedern der Einzelradschwingen betätigbar ist, so dass eine gemeinsame oder getrennte Absenkung oder Anhebung erzielbar ist.

Zum Absenken und Anheben des Fahrgestells werden die Luftfederbälge der Räder entsprechend entlastet oder mit Druckluft beaufschlagt. Für den hinteren Bereich erfolgt damit eine ausreichende Absenkung, um die Längstragelemente unter die Tragelemente der Traggestelle schieben zu können. Für den vorderen Teil ist beispielsweise in der DE 88 05 461 U1 eine gesonderte Absenk- und Anhebeinrichtung vorgesehen. Bei einem auch als Innenlader bezeichneten Fahrzeug ist die Sattelkupplung, die den Zapfen zum Anschließen an die Sattelzugmaschine trägt, an einer sogenannten Hubschwinge angebracht, die auf einer Luftfeder abgestützt ist (vgl. DE 35 07 587 A1). Bei dieser Luftfeder handelt es sich um einen Luftbalg, der mit den Luftfedern des Fahrgestells, d.h. der Räder, zusammen druckentlastet bzw. druckbelastet wird. Dadurch ist es möglich, das gesamte Fahrgestell mit dem darin angeordneten Transportgestell für das Glas anzuheben bzw. abzusenken, und zwar bis auf die Restbodenfreiheit, mit der das Fahrzeug noch verfahren werden kann. Die notwendige Bodenfreiheit wird dann durch das Füllen der einzelnen Luftbälge bzw. Luftfedern wieder hergestellt. Nachteilig hierbei ist jedoch, dass eine Restbodenfreiheit verbleibt, die das Aufnehmen des Transportgestells mit den Glaspaketen erschwert und die insbesondere nicht die Aufnahme aller im Verkehr befindlicher Transportgestelle ohne weiteres zulässt. Grund hierfür ist, dass sowohl die Luftfederung der Räder, d.h. also des Fahrgestells, als auch der Luftbalg, der der vorderen Ladeplattform bzw. dieser Sattelkupplung zugeordnet ist, nur über einen geringen Hub verfügen.

Die notwendige Bodenfreiheit ist also über die Luftfedern der Einzelradschwingen und der hydraulischen bzw. pneumatischen Hubschwinge einstellbar. Nachteilig dabei ist, dass die Hubschwinge ein nicht unerhebliches Gewicht aufweist, wodurch das zulässige Ladegewicht des Innenladers reduziert ist.

Der Erfindung liegt die Aufgabe zugrunde, einen Innenlader der vorgenannten Art bereitzustellen, bei dem das zulässige Ladegewicht erhöht und die Krafteinleitung verbessert werden kann, so dass die auftretenden Kräfte besser als bei den bekannten Hubschwingen fließen können.

Gemäß der Erfindung wird diese Aufgabe durch einen Innenlader mit den Merkmalen des Anspruchs 1 gelöst.

Die Hubschwinge ist aus zwei zueinander spitzwinkelig in Richtung Sattelplatte zulaufenden Hubschwingenarmen gebildet.

Hierdurch wird eine bessere Krafteinleitung und eine leichtere Bauweise erreicht. Dies führt insbesondere zu einer Gewichts- und Kosteneinsparung sowie zu einer Erhöhung der Nutzlast des Innenladers.

Zur Gewichts- und Kosteneinsparung kann auch eine "Abspeckung" des Chassis in seinem vorderen, auf die Sattelplatte zeigenden Bereich beitragen, indem die beiden Längsträger über zueinander spiegelsymmetrisch angeordnete und aufeinander zulaufende Schrägholme in wenigstens einen diese verbindenden Querträger übergehen. Dies kann das Gewicht des gesamten Chassis verringern.

Zur Verbesserung der Stabilität der Hubschwinge können die Hubschwingenarme miteinander über wenigstens eine Traverse (Querträger bzw. -balken) verbunden sein.

Weiterhin kann der die Schrägholme verbindende Querträger mit Pneumatik- oder Hydraulikzylindern oder anderen an sich bekannten Mitteln, beispielsweise Luftbalg, zum Bewegen, insbesondere Heben und Senken des Chassis gegenüber der Sattelplatte bestückt sein.

Schließlich bezieht sich die Erfindung auf eine erfindungsgemäße Hubschwinge, welche an beliebigem Nutzfahrzeug, beispielsweise an einem Innenlader gemäß Fig. 1 lösbar einmontiert werden kann.

Die Erfindung ist nachstehend in einem Ausführungsbeispiel anhand der Zeichnung näher erläutert. Die Figuren zeigen:
- Fig. 1: eine Hubschwinge gemäß Stand der Technik, in einer perspektivischen Ansicht;
- Fig. 2: eine V-förmige Hubschwinge gemäß Erfindung, in einer Draufsicht auf Sattelplatte;
- Fig. 3: eine perspektivische Ansicht der Hubschwinge gemäß Fig. 2;
- Fig. 4: eine Seitenansicht der Hubschwinge gemäß Fig. 2;
- Fig. 5: die in ein Chassis des Innenladers eingebaute Hubschwinge gemäß Erfindung;
- Fig. 6: eine Seitenansicht des Chassis in seinem vorderen Bereich, mit eingebauter Hubschwinge gemäß Erfindung;
- Fig. 7: eine perspektivische Ansicht des Chassis mit eingebauter Hubschwinge;
- Fig. 8: eine Frontansicht der Hubschwinge gemäß Erfindung;
- Fig. 9: die in das Chassis eingebaute Hubschwinge, in einer Frontansicht und
- Fig. 10a und 10b: jeweils ein Sattelkraftfahrzeug, bestehend aus einer Sattelzugmaschine und einem Innenlader mit erfindungsgemäßer Hubschwinge, im angehobenen und abgesenkten Zustand des Innenladers, in einer schematischen Seitenansicht.

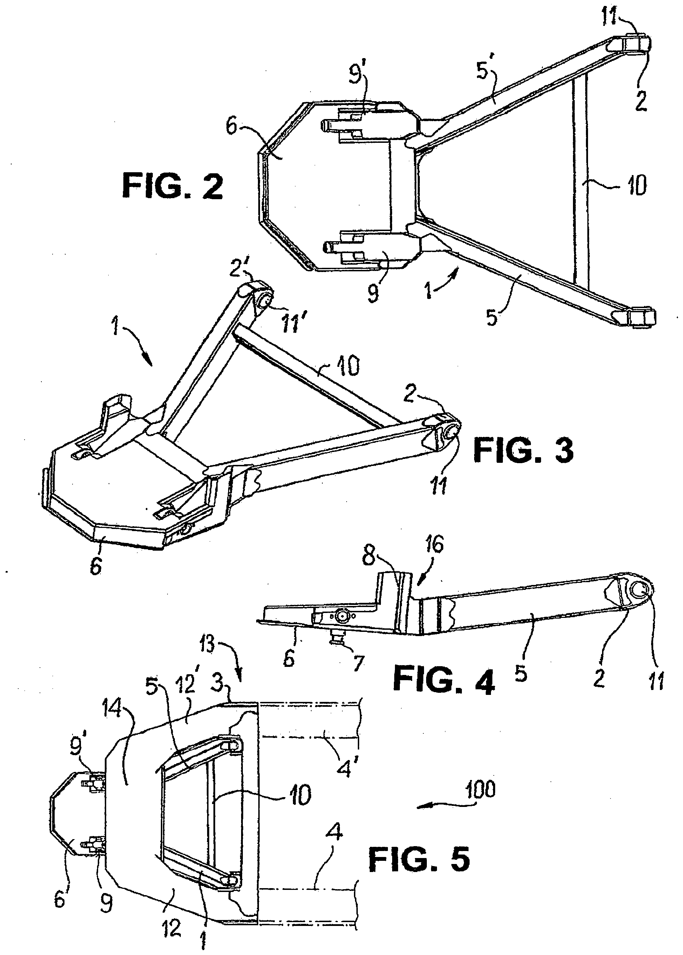

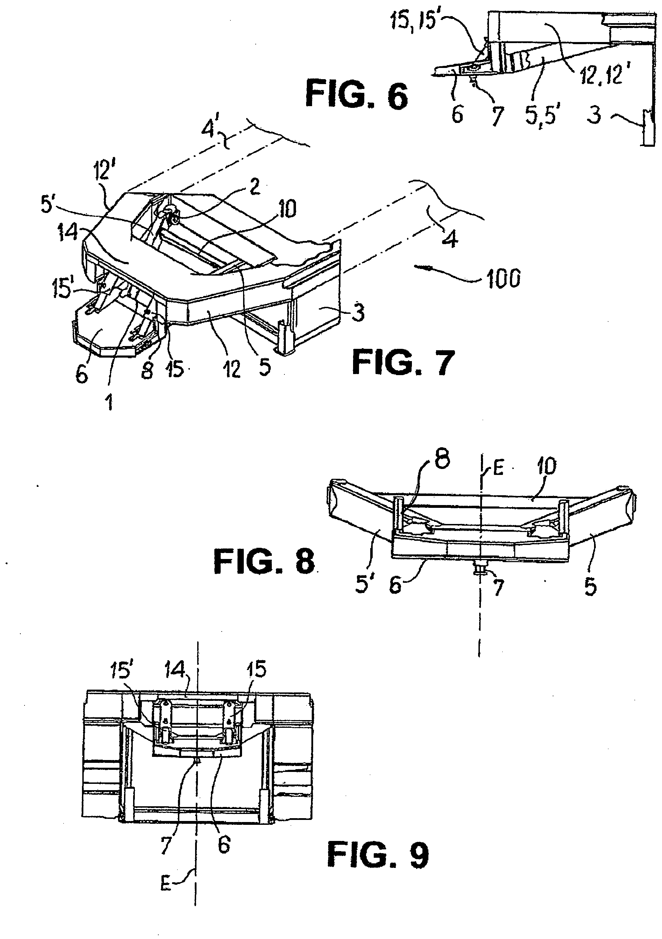

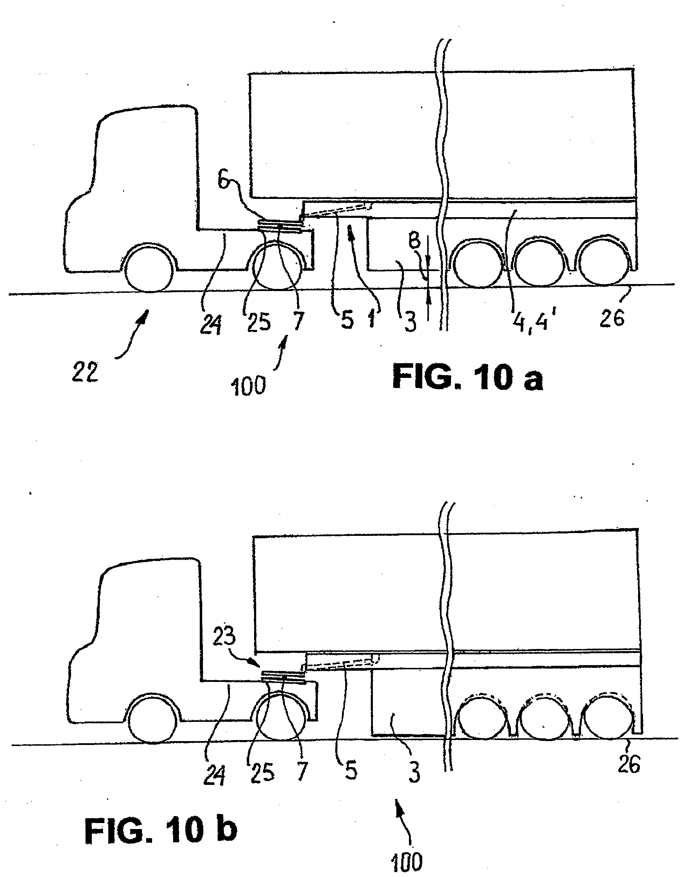

Die Figuren 10a und 10b zeigen einen Innenlader 100, welcher an einem Fahrgestell 24 einer Sattelzugmaschine 22 über eine Sattelkupplung 23 lösbar befestigt ist. Die Sattelkupplung 23 setzt sich aus einer ersten, am Fahrgestell 24 aufgeschraubten Sattelplatte 25, einem Königszapfen 7 und einer zweiter, an einer Hubschwinge 1 angebrachten Sattelplatte 6 zusammen. Auch die Figuren 5 und 7 zeigen den Innenlader 100 in einer sehr vereinfachten Form. Dort ist der Innenlader 100 durch ein schematisch angedeutetes Chassis 3 mit Längsträgern 4, 4' und einer neuartigen Hubschwinge 1 gezeigt.

Die Hubschwinge 1 gemäß Erfindung ist in den Figuren 2, 3, 4 und 8 detailliert dargestellt. Sie ist über Achsgelenke 2, 2' beweglich mit dem Chassis 3 des Innenladers 100 mit Längsträgern 4, 4' verbunden. Die Hubschwinge 1 ist über Gelenke 2, 2', soweit notwendig, über Arbeitszylinder 15, 15' (vergl. Fig. 6 und 7) verschwenkbar am Chassis 3 angeordnet.

Eine Besonderheit der Hubschwinge 1 sind die nicht parallel zueinander, sondern V-förmig, verlaufenden Hubschwingenarme 5, 5'. Die Hubschwingenarme 5, 5' sind zueinander spitzwinkelig angeordnet und laufen in die Sattelplatte 6 aus.

Wie die Figuren 5 und 7 zeigen, ist die Hubschwinge 1 mit einem quer verlaufenden und die Hubschwingenarme 5, 5' miteinander verbindenden Querträger 10 versteift. Der Einsatz des Querträgers 10 ist optional. Zusätzlich sind Aufnahmen 9, 9' (vgl. Fig. 2) für zwei schematisch angedeutete Hydraulikzylinder 15, 15' (vgl. Figuren 6 und 7) vorgesehen.

Weiterhin zeigen die Figuren 5 und 7 eine besonders vorteilhafte Ausgestaltung der Längsträger 4, 4', welche in einem vorderen Bereich 13 des Chassis 3 über zueinander spiegelsymmetrisch angeordnete und ebenso V-förmig in einen Querträger 14 auslaufende Schrägholme 12, 12' übergehen. Die Anordnung der Schrägholme 12, 12' und der Querträger 10, 14 (vgl. Fig. 5) ähnelt einem abgeschnittenen Großbuchstaben A.

Zum Verschieben der Sattelplatte 6 sind zwei zueinander spiegelsymmetrisch angeordnete, seitliche Führungen 8 (vgl. Figuren 4 und 8) vorgesehen, welche jeweils in einem Übergangsbereich 16 der Hubschwingenarme 5, 5' zur Sattelplatte 6 angeordnet sind.

Den Figuren 6, 8 und 9 ist eine schräge Anordnung der Hubschwingenarme 5, 5' gegenüber der Sattelplatte 6 zu entnehmen. Die Hubschwingenarme 5, 5' sind spiegelsymmetrisch zu einer mit Strichlinie angedeuteten Symmetrieebene E angeordnet. Daraus ergibt sich auch eine V-förmige, jedoch stumpfwinklige Anordnung der Hubschwingenarme 5, 5' zueinander (Figuren 8 und 9).

Vom großen Vorteil ist, dass die V-förmige Hubschwinge 1 zu einer besseren Krafteinleitung und außerdem zu einer Material- und Gewichtsersparnis führt. Damit kann das zulässige Ladegewicht des Innenladers 100 erhöht werden.

Die Fig. 10a zeigt den Innenlader 100 im angehobenen Zustand, bei dem das ganze aus der Sattelzugmaschine 22 und dem Innenlader 100 bestehende Gespann fahrbereit ist. Die Änderung eines Betrages B zwischen dem Chassis 3 und einer Fahrbahnebene 26 bewirkt eine Absenkung des Innenladers 100 (vgl. Fig. 10b). Abgesenkt wird mittels der erfindungsgemäßen Hubschwinge 1 im Bereich der Sattelkupplung 23 und mittels einer hydraulischen bzw. pneumatischen Achsfederung an den Fahrzeugsachsen. Der Innenlader 100 berührt die Fahrbahnebene 26, so dass er sehr einfach von hinten beladen werden kann.

Natürlich ist die Erfindung nicht auf das oben dargestellte Ausführungsbeispiel beschränkt. Weitere Ausgestaltungen sind möglich, ohne den Grundgedanken der vorliegenden Erfindung zu verlassen.

### Bezuaszeichenliste

- 1: Hubschwinge
- 2, 2': Achsgelenk
- 3: Chassis
- 4, 4': Längsträger
- 5, 5': Hubschwingenarm
- 6: Sattelplatte
- 7: Königszapfen
- 8: Führung
- 9, 9': Aufnahme
- 10: Querträger
- 11, 11': Bolzenaufnahme
- 12, 12': Schrägholm
- 13: vorderer Bereich
- 14: Querträger
- 15, 15': Hydraulikzylinder
- 16: Übergangsbereich
- 17: Querträger (Fig. 1)
- 18: Querträger (Fig. 1)
- 19: Querträger (Fig. 1)
- 20: Querbalken (Fig. 1
- 21: Längsbalken (Fig. 1)
- 22: Sattelzugmaschine (Fig. 10)
- 23: Sattelkupplung (Fig. 10)
- 24: Fahrgestell
- 25: Sattelplatte (v. 24)
- 26: Fahrbahnebene
- 100: Innenlader
- 200: Innenlader (Fig. 1)
- B: Betrag (Fig. 10a
- E: Symmetrieebene (Fig.8)

## Patentansprüche

1. Innenlader (100), umfassend:
- ein Chassis (3) mit zwei parallel zueinander angeordneten Längsträgern (4, 4'), an denen Achshalteböcke mit gefederten Einzelradschwingen zur Aufnahme von Fahrzeugrädern befestigt sind,
- und eine über Bolzenaufnahmen (11, 11') an den Längsträgern (4, 4') gelagerte Hubschwinge (1) mit einer an der Hubschwinge (1) angebrachten Sattelplatte (6), die einen Zapfen (7) zum Anschließen an eine Sattelzugmaschine trägt,
- wobei die Hubschwinge (1) aus zwei zueinander spitzwinkelig in Richtung Sattelplatte (6) zulaufenden Hubschwingenarmen (5, 5') gebildet ist,
**dadurch gekennzeichnet, dass**
- die Hubschwinge (1) hydraulisch oder pneumatisch angetrieben ist,
- die Fahrzeuglängsträger (4, 4') im vorderen Bereich (13) in Draufsicht auf das Chassis (3) etwa einen abgeschnittenen Großbuchstaben A ergeben und
- die Hubschwinge (1) zueinander spiegelsymmetrisch angeordnete, seitliche Führungen (8) aufweist, welche jeweils in einem Übergangsbereich (16) der Hubschwingenarme (5, 5') zur Sattelplatte (6) liegen und etwa senkrecht zur Sattelplatte (6) verlaufen.

2. Innenlader (100) nach Anspruch 1, **dadurch gekennzeichnet, dass** die Hubschwinge (1) wenigstens einen die Hubschwingenarme (5, 5') miteinander verbindenden Querträger (10) aufweist.

3. Innenlader (100) nach Anspruch 1 oder 2, **dadurch gekennzeichnet, dass** die Längsträger (4, 4') in einem vorderen Bereich (13) des Chassis (3) über zueinander spiegelsymmetrisch angeordnete und aufeinander zulaufende Schrägholme (12, 12') in wenigstens einen diese verbindenden Querträger (14) übergehen.

4. Innenlader (100) nach einem der Ansprüche 1 bis 3, **dadurch gekennzeichnet, dass** Pneumatik- oder Hydraulikzylinder (15, 15') vorgesehen sind, mittels derer das Chassis (3) gegenüber der Sattelplatte (6) angehoben bzw. absenkbar ist.

## Claims

1. Inloader (100), comprising:
- a chassis (3) having two side members (4, 4') arranged parallel to one another, to which axle brackets with single spring-loaded swing arms for receiving vehicle wheels are attached,
- and a lifting unit (1), mounted on the side members (4, 4') with bolt receivers (11, 11'), with a saddle plate (6) that is attached to the lifting unit (1) and which has a pin (7) for connection to a tractor unit,
- wherein the lifting unit (1) is formed from two lifting arms (5, 5') running in the direction of the saddle plate (6) at an acute angle to one another,
**characterized in that**
- the lifting unit (1) is driven hydraulically or pneumatically,
- the vehicle side members (4, 4') in the front region (13) somewhat resemble a truncated uppercase A when the chassis is viewed from above, and
- the lifting unit (1) has lateral guides (8) which are arranged mirror-symmetrically to one another and which are each located in a transition region (16) of the lifting arms (5, 5') to the saddle plate (6) and run approximately perpendicular to the saddle plate (6).

2. The inloader (100) as claimed in claim 1, **characterized in that** the lifting unit (1) has at least one cross member (10) connecting the lifting arms (5, 5') to one another.

3. The inloader (100) as claimed in claim 1 or 2, **characterized in that** the side members (4, 4') in a front region (13) of the chassis (3) pass into at least one cross member (14) connecting them by means of angled struts (12, 12') which are arranged mirror-symmetrically to one another and converge toward one another.

4. The inloader (100) as claimed in one of the claims 1 to 3, **characterized in that** pneumatic or hydraulic cylinders (15, 15') are provided, by means of which the chassis (3) can be raised or lowered relative to the saddle plate (6).

## Revendications

1. Chargeur d'intérieur (100), comprenant:
- un châssis (3) avec deux longerons disposés parallèlement l'un à l'autre (4, 4'), sur lesquels sont fixés des supports d'essieu avec des suspensions de roue indépendantes à ressort pour recevoir les roues du véhicule,
- et un bras de levée (1) monté sur les longerons (4, 4') par l'intermédiaire de logement d'axe (11, 11'), avec une sellette (6) fixée au bras de levée (1) et portant un pivot (7) permettant l'attelage à un véhicule tracteur,
- sachant que le bras de levée (1) est constitué de deux bras (5, 5') se déplaçant vers la sellette (6) dans un angle aigu l'un par rapport à l'autre,
**caractérisé par le fait que**
- le bras de levée (1) est à commande hydraulique ou pneumatique,
- les longerons du véhicule (4, 4') situés dans la zone avant (13) en vue de dessus du châssis (3) représentent approximativement une lettre majuscule A tronquée et
- le bras de levée (1) comporte des guides latéraux (8) disposes symétriquement l'un par rapport à l'autre, et se situant chacun dans une zone de transition (16) des bras (5, 5') du bras de levée vers la sellette (6) et qui s'étendent à peu près perpendiculairement à la sellette (6).

2. Chargeur d'intérieur (100) selon la revendication 1, **caractérisé par le fait que** le bras de levée (1) comprend au moins une traverse (10) reliant les bras (5, 5') du bras de levée entre eux.

3. Chargeur d'intérieur (100) selon l'une des revendications 1 ou 2, **caractérisé par le fait que** les longerons (4, 4') situés dans une zone avant (13) du châssis (3) sont en continuité avec au moins une traverse (14) qui les relie par l'intermédiaire d'éléments inclinés (12, 12') disposés symétriquement les uns par rapport aux autres et convergeant les uns vers les autres.

4. Chargeur d'intérieur (100) selon l'une des revendications 1 à 3, **caractérisé par le fait que** des vérins pneumatiques ou hydrauliques (15, 15') sont prévus pour permettre au châssis (3) d'être relevé ou abaissé par rapport à la sellette (6).
